# EUROPEAN PATENT SPECIFICATION

(11) **EP 3 172 277 B1**
(45) Date of publication and mention of the grant of the patent: **24.06.2020**
(21) Application number: 14792893.1
(22) Date of filing: 25.07.2014
(51) Int. Cl.: B82Y 30/00, C08L 23/10, C08L 23/12, C08K 5/00, C08J 3/00, C08L 23/08, C08L 23/16, C08L 23/26, C08L 51/06, C08K 3/013, C08J 3/20

(54) **HIGH-RESILIENCY RIGID COMPOSITE MATERIALS, AND USE AND PRODUCTION THEREOF**
HOCHELASTISCHE STARRE VERBUNDMATERIALIEN UND VERWENDUNG UND HERSTELLUNG DAVON
MATÉRIAUX COMPOSITES RIGIDES À HAUTE RÉSILIENCE, LEUR UTILISATION ET PRODUCTION

(43) Date of publication of application: 31.05.2017
(73) Proprietor: G.T. LINE S.R.L., 40053 Valsamoggia, Frazione Crespellano (IT)
(72) Inventor: TONELLI, Massimo, 40137 Bologna (IT); CANALINI, Giovanni Antonio, 20097 San Donato Milanese (IT)
(74) Representative: Modiano, Micaela Nadia
(86) International application number: PCT/IT2014/000196
(87) International publication number: WO 2016/013034

(56) References cited:
- EP-A1- 2 080 784
- WO-A1-2007/002435
- US-A1- 2007 010 616
- US-A1- 2010 152 360

## Description

### Technical field of the invention

The present invention relates to a process for producing high-resiliency rigid composite material, to a high-resiliency rigid composite material, and to its uses.

### Background of the invention

Compounding, which is known in the petrochemical and plastics production sectors, is a process that provides for the production of composite materials and consists in mixing together thermoplastic polymers of various polyolefinic nature in a molten state with the use of high friction values (high mechanical shear).

In the background art, one of the limitations of polymerization processes is that they provide polyphasic thermoplastic polymeric materials, which can have a broad and balanced performance set, capable of meeting functional requirements that are required of particular articles.

These processes cannot ensure at the same time rigidity and tenacity of petrochemical-process polymers, since the use of suitable formulation solutions conflicts with:
- the need to avoid poisoning the catalytic system;
- the need to have high stoichiometric conversions; and
- the need to provide high levels of productivity.

This is the case of processes for polymerization of polypropylene (PP) in the liquid phase or in the gaseous phase with catalytic systems with a high yield of isotactic polymer, incapable of producing PP materials characterized at the same time by high rigidity and high resiliency at temperatures below -30°C, in which the raw materials used can only be propylene monomer and ethylene comonomer.

The method according to the present invention aims at obtaining thermoplastic materials that are composites of polypropylene and have at the same time good properties in terms of rigidity and resiliency, by mixing in a molten state polymers having different characteristics, modifiers, additives and fillers.

The innovation consists in using the technology of compounding, which is known for mixing in a molten state polymers with additives and fillers, but which is used in an original way in terms of
- technological configurations for the plant part and
- chemical-physical science for the choice of the materials used.

With the present invention, a process for the production of high-resiliency rigid composite material has been found surprisingly which provides for the non-obvious combination of
- mixes in a molten state, which use mixing technologies with high shear, with variation of technological parameters; and
- the use of polymeric and non-polymeric compounds;
where said high-resiliency rigid composite material has a resilient and rigid performance structure.

This aim and other objects are achieved by the subject matter of the present invention.

### Summary of the invention

The present invention relates to a process for the production of high-resiliency rigid material, characterized in that it comprises the step of mixing and dispersing in a molten state in a mixer the following compounds:
- polymers of isotactic propylene (PP), selected from the group constituted by: propylene homopolymers and propylene copolymers;
- modifying polymers selected from the group constituted by: polymers of poly alpha olefins (POE), ethylene propylene rubbers (EPR), ethylene propylene dimer rubbers (EPDM);
- compatibility promoters selected from the group constituted by: olefin polymers functionalized with maleic anhydride, olefin polymers functionalized with silanes, ethylene-acrylic acid (EAA) copolymers, polycaprolactones;

- additives selected from the group constituted by: phenols, phosphites, ethers, thioethers, benzophenones, benzotriazole derivatives, sterically hindered amines, halogenated additives, melamines, melamine salts, salts of phosphorus derivatives, glyceryl monostearate, stearic salts of calcium, stearic salts of zinc, organic compounds, inorganic salts, inorganic oxides, carbon blacks;
- fillers selected from the group constituted by: inorganic fillers having an isotropic structure, fillers having an anisotropic structure;
wherein said fillers are nanofillers having a particle size of a few tens of angstroms;
and wherein said process provides for:
- a temperature comprised in the range of 120 - 230°C;
- a rotation rate of the screws that compose said mixer comprised in the range of 125-1250 rpm.

The present invention relates also to a high-resiliency rigid composite material, characterized in that it comprises:
- polymers of isotactic propylene (PP), selected from the group constituted by: propylene homopolymers and propylene copolymers;
- modifying polymers selected from the group constituted by: polymers of poly alpha olefins (POE), ethylene propylene rubbers (EPR), ethylene propylene dimer rubbers (EPDM);
- compatibility promoters selected from the group constituted by: olefin polymers functionalized with maleic anhydride, olefin polymers functionalized with silanes, ethylene-acrylic acid (EAA) copolymers, polycaprolactones;
- additives selected from the group constituted by: phenols, phosphites, ethers, thioethers, benzophenones, benzotriazole derivatives, sterically hindered amines, halogenated additives, melamines, melamine salts, phosphorus derivatives, glyceryl monostearate, stearic salts of calcium, stearic salts of zinc, organic compounds, inorganic salts, inorganic oxides, carbon blacks;
- fillers selected from the group constituted by: inorganic fillers having an isotropic structure, fillers having an anisotropic structure;
wherein said fillers are nanofillers having a particle size of a few tens of angstroms.

The present invention also relates to the use of the composite material according to the present invention to produce sheets for thermoforming by extrusion, injection molding of technical cases, molding of containers for electrical/electronic instruments, injection molding of mechanical instruments, injection molding for containers for protecting electronic systems and for appliances, injection molding for components for workplace safety, injection molding for components for the automotive sector.

### Detailed description of the invention

According to the present invention, the term compounding refers to a process that provides for the production of composite materials and consists in mixing together thermoplastic polymers of various polyolefinic nature in a molten state with the use of high friction values (high mechanical shear).

According to the present invention, the term "compounds" refers to composite materials as obtained from the compounding process.

According to the present invention, the values expressed as percentage by weight refer to the percentage by weight of the total weight.

According to the present invention, the term "high shear" refers to the high transfer of mechanical work by friction, caused:
a) by the mixing of the various components with the polymeric material, which is about to melt or already completely molten, between the screws of the extruder which mutually interpenetrate and rotate together at high speed; and
b) by the dynamic contact between the pair of screws and the cylinder that contains them.

According to the present invention, the dimensional values expressed and relating to the fillers described here refer to the particle size referred to unit fillers, i.e., to the average size of the diameter measured for said fillers.

The fillers are differentiated according to their average particle size by screening. The dimensions of the fillers are measured by means of various techniques, capable of providing the Gaussian distribution of the dimensions of the elementary particles.

One value that is useful for differentiation of the fillers with respect to their unit size is the value D₅₀, which represents the size of the mesh of a screen through which 50% by weight of the filler subjected to measurement by screening pass. For example, the value D₅₀ = 2 indicates that at least 50% of said filler passes through a screen with a diameter (or maximum size) of 2 micrometers.

The methods for measuring particle size, in relation to the nature of the powder (electrostaticity, wettability, morphology, etc.) are, among others:
- sedigraphic method by deposition of wet powders;
- laser method;
- screening.

For inorganic fillers of the type indicated in the present document, screening is often used with reference to the ASTM D 422 standard.

According to the process of the present invention, the following materials are mixed in a molten state and are dispersed and distributed uniformly in polypropylene matrices:
A) thermoplastic polymers;
B) additives;
C) fillers and/or reinforcements that differ in terms of organic and inorganic nature.

The result of the molten mixing process, known as compounding, is characterized by the obtainment of composite materials or compounds constituted by a thermoplastic polymeric matrix in which other polymers are dispersed and distributed which have a modifying function, additives, fillers and/or reinforcements.

If necessary, said composite materials or compounds are rendered compatible with the polymeric matrix by adding bonding agents.
A) Thermoplastic polymers: the thermoplastic polymers involved in the mix are different in terms of monomers and comonomers used with crystalline morphologies that vary in terms of shape and crystal content, characterized in that the polymeric matrix that provides rigidity is isotactic polypropylene. The impact modifier systems are other polymers of olefinic nature with an elastomeric behavior, characterized by a semicrystalline morphologic component and by amorphous components with glass transition temperatures well below 0°C.
   The impact modifier polymers, which can have an elastomeric behavior, are also thermoplastic and therefore fall within this category.
B) Additives: the thermal and UV stability of the thermoplastic matrices and of the polymeric modifiers is obtained by adding phenol/phosphite/thioether stabilizing systems, triazoles, variously substituted benzophenones, sterically hindered amines, and in any case additives that are compatible in terms of content and molecularity with the expectations of better protection of the macromolecular system against the environments expected during use of the plastic articles obtained from these composites.
C) Fillers and/or reinforcements: a contribution to imparting high rigidity is provided by fillers with fine particle size (micron and submicron dimensions) or with a particle size of a few tens of angstroms (nanofillers) or appropriate mixtures of fillers that are different in terms of dimensions and constitution, capable of avoiding the forming of coalescences.

To ensure that the corresponding products have the best result in terms of uniformity and constancy of performance, compatibility promoters of the ionomeric or acrylic or maleic type are used which are capable of ensuring that the composites have:
- the best rheological behavior in a molten state during the manufacturing steps;
- uniformity of the polyphasic systems, both during transformation and during use of the products obtained by using the composites according to the invention.

The effectiveness of said compounding process in terms of distribution and dispersion of the modifying ingredients is evaluated by monitoring:
1) the technological parameters (such as temperature profiles, rotation rate of the screw or screws, mixing work detected by the absorption of electric power used during compounding, head pressure and productivity), which turn out to be crucially important in ensuring an optimum performance balance; by varying said technological parameters, one seeks to achieve the most suitable plant configuration for obtaining the intimacy of the organic and inorganic phases and ensure it at the various flow gradients provided by the various transformation techniques of thermoplastic polymeric compounds.
2) the energy consumption per product unit (kWh/kg), the value of which represents the validity of the method, since the best uniformity (quality) of the composite material obtained with said compounding process is closely linked to the constancy of this parameter and to its minimum value (lower energy consumption, lower industrial cost, lower thermal stress applied to the polymeric phase, lower formulation cost for thermal protection of the compound against the compounding process and subsequently the manufacturing process).
3) the quality of the compounds: it is monitored by means of measurements made on standardized specimens obtained by injection or compression molding and subjected to typical characterization, according to international standards, an indication of which is given in the tables that follow.

The present invention relates to a process for the production of high-resiliency rigid composite material, characterized in that it comprises the step of mixing and dispersing in a molten state in a mixer the following compounds:
- polymers of isotactic polypropylene,
- modifier polymers,
- compatibility promoters,
- additives, and
- fillers.

The process according to the present invention provides for:
- a temperature comprised in the range of 120-230°C;
- a rotation rate of the screws that compose said mixer comprised in the range of 125-1250 rpm.

Preferably, the step of mixing and dispersing in a molten state, or the dosage of the raw materials that will constitute the compound, occurs gravimetrically or volumetrically. Even more preferably, said step of mixing and dispersing in a molten state occurs gravimetrically.

The gravimetric approach is preferred due to the possibly large difference between the specific gravities of the different ingredients which can constitute the mix.

Gravimetric dosage of the components is preferred in order to ensure that the hopper for the first feeding of the polymeric components operates with imminent filling, preferably without accumulation and with a low head of solid material.

The dosage of the fillers, preferably gravimetrically and with forced feeding, can occur on a molten polymeric mix.

Preferably, said mixer is of the high shear type.

Preferably, in the process according to the present invention the step of mixing in a molten state (compounding) also provides for a system for monitoring the absorption of driving power of the motor of the co-rotating twin screw extruder, capable of detecting continuously the mixing work.

Said mixing work is insured:
- by the contributions of the heating of the cylinder (also known as barrel);
- by the adjustment of the temperature of the screws; and
- by the friction of the polymeric mass against the metallic surface of the screws and of the containment cylinder, which varies with the rotation rate of the screws with equal set temperatures.

Preferably, said work imparted to the molten polymeric mass is expressed in kWh/kg.

For example, the process for the production of high-resiliency rigid material according to the present invention can comprise the step of mixing and dispersing in a molten state in a mixer the following compounds and in the following quantities expressed as percentage by weight:
- PP copolymer: 73.2% by weight;
- POE polymer: 19.5% by weight;
- modified maleic PE: 1.5% by weight;
- stabilizing additives: 0.3% by weight;
- nano filler of CaCO₃: 5.5% by weight.

With said composition, the best performance set for dispersion and distribution occurs with values of kWh/kg comprised between 0.1 and 0.2.

The present invention relates also to a high-resiliency rigid composite material, characterized in that it comprises:
- polymers of isotactic propylene,
- modifier polymers,
- compatibility promoters,
- additives, and
- fillers.

According to the process and the material of the present invention, said polymers of isotactic propylene are selected from the group constituted by: homopolymers of propylene and copolymers of propylene.

Preferably, said homopolymers of propylene and copolymers of propylene can have the form of granules, powder or flakes.

Preferably, said homopolymers of propylene have a fluidity comprised between 0.5 and 30 g/10' or ml/10'.

Preferably, said homopolymers of propylene are present in a quantity comprised in the range of 45-85% by weight.

Preferably, said propylene copolymers have a fluidity comprised between 5 and 30 g/10' or ml/10'.

Preferably, said propylene copolymers are present in a quantity comprised in the range of 45-90% by weight.

According to the process and the material of the present invention, said modifying polymers are selected from the group constituted by: polymers of poly alpha olefins (POE), ethylene propylene rubbers (EPR), ethylene propylene dimer rubbers (EPDM).

Preferably, said polymers of poly alpha olefins (POE), ethylene propylene rubbers (EPR), ethylene propylene dimer rubbers (EPDM) are present in the form of flakes or granules.

Preferably, said polymers of poly alpha olefins (POE) and ethylene propylene dimer rubbers (EPDM) can have a crystalline phase or lack such a phase.

Preferably, said poly alpha olefin polymers (POE) are present in a concentration comprised in the interval of 10-30% by weight.

Preferably, said ethylene propylene rubbers (EPR) are present in a concentration comprised in the range of 5-20% by weight.

Preferably, said ethylene propylene dimer rubbers (EPDM) are present in a concentration comprised in the range of 5-20% by weight.

According to the process and the material of the present invention, said compatibility promoters are selected from the group constituted by: olefin polymers functionalized with maleic anhydride, olefin polymers functionalized with silanes, ethylene-acrylic acid (EAA) copolymers, polycaprolactones.

Preferably, said olefin polymers functionalized with maleic anhydride are equivalent to a maleic anhydride present in the range of 0.5-0.8% by weight.

Preferably, said olefin polymers functionalized with maleic anhydride are present in a range comprised between 2 and 5% by weight.

Preferably, said olefin polymers functionalized with silanes are present in a concentration comprised in the range of 0.5-5% by weight.

Preferably, said ethylene-acrylic acid (EAA) copolymers are present in a concentration comprised in the range of 6-12% by weight.

Preferably, said polycaprolactones are in powder or granule form.

Preferably, said polycaprolactones are present in a concentration comprised in the range of 0.5-2% by weight.
The use of compatibility promoters has the purpose of:
- varying the surface tension of the components, improving the physical adhesion among the phases;
- facilitating the workability of the molten system (easy processing);
- creating intramolecular bonds among the components.

With an equal composition of the polypropylene matrix, impact resistant polymer, stabilizing additives and fillers and/or reinforcements, the use of a compatibility promoter ensures a better performance balance of the compound.

Said compatibility promoters between the polymeric matrix and the additives also have the function of improving affinity among the fillers used also to increase rigidity.

Said polymers modify the impact resistance properties and facilitate bonds with the polymeric matrix.

In particular, the polymers selected from the group constituted by: acrylic polymers, ionomers, polycaprolactones, polymers with silane and maleic functionality have the function of improving affinity between the fillers and the polymeric matrix, limiting coalescence among the inorganic products used to increase rigidity.

According to the process and the material of the present invention, said additives are selected from the group constituted by: phenols, phosphites, ethers, thioethers, benzophenones, benzotriazole derivatives, sterically hindered amines, halogenated additives, melamines, melamine salts, salts of phosphorus derivatives, glyceryl monostearate, stearic salts of calcium, stearic salts of zinc, organic compounds, inorganic salts, inorganic oxides, carbon blacks.

Preferably, said additives are present in a concentration comprised in the range of 0.1-0.5% by weight.

Said phenols, phosphites, ethers and thioethers perform the function of thermal stabilizers.

Said benzophenones, benzotriazole derivatives, sterically hindered amines perform the function of UV stabilizing agents.

Said halogenated additives, melamines, melamine salts, phosphorus derivatives perform the function of flame-retardant additives.

Said glyceryl monostearate, stearic salts of calcium and of zinc perform the function of antiacid and process aids.

Said organic compounds, inorganic salts and inorganic oxides, carbon blacks perform the function of dyes and pigments.

Each composite system (compound), constituted by a polypropylene matrix, impact resistant modifier polymer and compatibility promoter, is completed by the presence of additives, the functions of which are:
- to protect the molecular masses from thermal degradation caused by the transformation processes and by the operating conditions with the addition of 0.1 to 0.5% by weight of chemical compounds such as phenols, phosphites, ethers and thioethers on their own or synergistically together;
- to improve the resistance to ultraviolet radiation of the corresponding products, with the addition of 0.1 to 0.5% by weight of chemical compounds of the type of benzophenones or benzotriazole or sterically hindered amines.

Each compound contains stabilizing additives in quantities and qualities that are compatible with the compounding process and with the operating conditions provided for the products obtained from these compounds.

Said additives perform the functions of:
- stabilizing the polymeric matrix with respect to molten mix processes and processes for transformation into products;
- thermal stabilization with respect to the environmental conditions that are present during use;
- stabilization with respect to atmospheric agents and UV radiation;
- increase in flame resistance;
- lubrication and aid to flow in the molds;
- pigmentation and coloring with organic and inorganic compounds.

Said fillers are selected from the group constituted by: inorganic fillers having an isotropic structure and fillers having an anisotropic structure;
wherein said fillers have dimensions of the unit components comprised in the range of 10⁻³ mm - 10⁻⁶ mm.

Preferably, said inorganic fillers with isotropic structure are selected from the group constituted by: micronized talc with high purity in silicates of calcium and magnesium, calcium carbonate.
Preferably, said micronized talc with high purity in silicates of calcium and magnesium, has a shape extension of more than 15, with values D₅₀ comprised in the range of 0.2-2 micrometers, in concentrations comprised in the range of 0.5-12% by weight.

Preferably, said calcium carbonate is in the form of a nanofiller and has dimensions comprised in the range of 0.5-0.005 micrometers in a concentration comprised in the range of 0.1-7.5% by weight.

Preferably, said fillers with anisotropic structure are selected from the group constituted by carbon nanotubes and glass fiber.

Preferably, said carbon nanotubes have a shape extension of more than 500; said nanotubes are present in a concentration comprised in the range between 0.5 and 7.5% by weight.

Preferably, said glass fibers are cut with a length comprised in the range of 0.2-4.5 mm, with elementary burr with a diameter comprised in the range of 5-15 micrometers.

Said fillers have the function of supporting the loss in rigidity caused by the presence of impact modifier polymers without compromising the performance balance.

In particular, the use of fillers having small and very small dimensions as defined above, i.e., characterized by values of the unit components comprised between a few micrometers (10⁻³ mm) and a few angstroms (10⁻⁶ mm), advantageously and surprisingly provides the characteristics of rigidity and high resiliency as described in the present invention.

In order to compensate for the loss in rigidity induced in the matrix by the use of resilient polymeric modifiers, inorganic fillers are used. These fillers provide different effects as a consequence:
- of the nature of the filler
- of the morphology and particle size of the filler
- of the distribution and dispersion effectiveness of the filler in the matrix polymer
- of the use of compatibility promoters, the effectiveness of which depends:
   - on the variation of the surface tension of the filler
   - on the possibility of providing bonds, even low-energy bonds (such as hydrogen bonds), between the filler and the polymeric system.

According to the process and the material of the present invention, in a first preferred formulation, cited by way of non-limiting illustration of the application of the invention:
- the polymers of the isotactic propylene are copolymers of propylene in blocks, with an average content of ethylene, present in a percentage equal to 71.7% by weight of the total,
- the modifier polymers are polymers of poly alpha olefins (POE), with a crystalline phase, which are present in a percentage equal to 20.5% by weight of the total,
- the compatibility promoters are olefin polymers functionalized with maleic anhydride, present in a percentage equal to 2.5% by weight of the total,
- the additives are selected from the group constituted by: phenols, phosphites, thioethers, and are present in a percentage equal to 0.3% by weight of the total,
- and finally the fillers are constituted by nano calcium carbonate, present in a percentage equal to 5% by weight of the total.

It is useful to note that this formulation is of unquestionable interest due to the high resiliency that is provided to the material without compromising its rigidity.

According to the process and the material of the present invention, in a second preferred formulation, also cited by way of non-limiting example of the application of the invention, which therefore does not exhaust the formulations comprised within the protective scope claimed herein:
- the polymers of the isotactic propylene are copolymers of propylene in blocks, with an average content of ethylene, present in a percentage equal to 71.7% by weight of the total,
- the modifier polymers are polymers of poly alpha olefins (POE), with a crystalline phase, which are present in a percentage equal to 20.5% by weight of the total,
- the compatibility promoters are olefin polymers functionalized with maleic anhydride, present in a percentage equal to 2.5% by weight of the total,

- the additives are selected from the group constituted by: phenols, phosphites, thioethers, and are present in a percentage equal to 0.3% by weight of the total,
- while the fillers are constituted by carbon nanotubes, present in a percentage equal to 5% by weight of the total.

It is noted that this specific formulation makes it possible to obtain materials that have high resiliency and high rigidity in addition to excellent antistatic properties.

The present invention relates also to the use of the composite material of the present invention to extrude sheets for thermoforming by extrusion, preferably for an impact-resistant and radio frequency isolation version, injection molding of technical cases, preferably for an impact-resistant and radiofrequency isolation version, molding of containers for electrical/electronic instruments, injection molding of mechanical components, injection molding of protective containers for electronic systems and for equipment, injection molding of components for workplace safety, preferably for helmets, projectile barriers, injection molding of components for the automotive sector.

With reference to the production plants, plants are used which are capable of providing high friction in order to embed the organic and/or inorganic added material uniformly in the matrices of polypropylene.

The plants are extruders of the single-screw type or axial twin-screw type with high rotation rate, provided with forced feeding of molten polymeric material, adiabatic continuous mixers of the two-stage type with underlying extruder/laminator and single-screw extruders rotating with an eccentric element at high-speed (co-kneader).

The geometry of the screws has a variable profile and can be constituted by conveyance and mastication elements, the latter being obtainable with multi-cusp elements (double and triple start), capable of facilitating, together with the advancement of the polymeric flow with imminent softening, a partial regression of said flow.

The feeding of the ingredients into the mixing extruders in a molten state occurs continuously by means of gravimetric or volumetric dosage systems; the feeding of part of the ingredients can occur with molten polymeric material by means of forcing screws for fillers and/or reinforcements.

The mass of molten polymer that contains the modifying ingredients uniformly dispersed and distributed therein by the screws having high masticating capacity profiles is forced through a manifold into an extrusion head and into a die.

The molten mass formed by the die can be:
- extruded in the form of spaghetti, which are subsequently cooled and cut in a cylindrical shape with uniform dimensions
- or cut at the head in the form of beads which are water cooled.

The process thus described turns out to be inventive and original because:
- acting on the technological mixing parameters (such as temperature profiles, rotation rates of the screw or screws, head pressure and productivity);
- promoting an energy consumption per unit of product (kWh/kg) the value of which represents the validity of the method, better uniformity (quality) of the composite material being tightly linked to the constancy of this parameter and to its minimum value;
- monitoring the quality of the composite materials with measurements made on standardized specimens, obtained by injection molding or compression molding and subjected to typical characterization according to international standards;
- using particular formulations in terms of chemical composition, morphology and capacity for interactive reaction among the components; makes it possible to obtain thermoplastic composite materials that are at the same time rigid and highly resilient.

With reference to the technological method, in order to obtain the compounds of the type according to the present invention, the components that constitute the composite material (compound), the physical, thermal and mechanical characteristics of which depend on their mutual concentration, are dosed gravimetrically and continuously in molten state mixers, constituted by:
- twin-screw extruders with interpenetrating and co-rotating screws contained in a cylinder
- characterized by a high rotation rate of the screws (125 to 1250 rpm) and by variable geometries of the profile of the screws, formed by conveyance, mixing and mastication units
- a main hopper feed and one or more secondary feeds along the cylinder, with forcing of the molten polymeric material, by means of a screw or twin screw arranged at right angles on the side of the cylinder of the extruder, of some components such as the fillers
- possibility of evacuating any gases and water vapor (degassing) from one or more openings along the extension of the cylinder of the extruder, said evacuation being facilitated by the application of a partial vacuum by means of a vacuum pump
- conveyor and extrusion head with a die with multiple holes for forming the material mixed in the molten state
- underwater cutting with a rotor mill arranged axially offset at 90° with respect to the outlet of the molten material, with forming of granules in the form of beads
- as an alternative, stretching of the extruded material into spaghetti and cutting thereof in a cylindrical shape with a milling cutter
- drying, screening and packaging.

In a preferred embodiment, the production of the compounds, the performance of which is indicated hereinafter, was performed in a laboratory compounding plant using the following parameters:
- extruder with interpenetrating and co-rotating twin screws;
- gravimetric dosage system by weight loss with three dosage units:
   - two dosage units at the first feed from the main loading hopper, one for raw materials in granular form and one for the mix of additives in powder or flake form,
   - one system feeding dosage unit for forced feeding of molten material
- screw diameter: 25 mm
- screw length = 32 times the diameter
- screw speed: 100 to 750 rpm, depending on the thermomechanical work to be imparted to the mix and on the need for uniformity that is required of each type of mix
- temperature profile: comprised between 120 and 230°C
- cutting into spaghetti (compounds having a cylindrical shape)
- insertion of the fillers on molten thermoplastic material
- insertion of the degassing pump (application of vacuum from 0.150 to 0.550 bars) to evacuate gas, humidity and volatile substances, performed during the molten mixing process
- the use of a variable filtering light filter and the insertion of an automatic filter changer to stop particles with discrete dimensions is optional
- spaghetti head and cutting with rotary cutter
- screening
- production of 5 to 20 kg/hour, in relation to the type of compound that is produced, to the apparent density of the components and to the specific gravity of the compound itself.

Industrial compounding lines repeat in general terms the indicated processing parameters and are the scale-up of the technological set used in the laboratory to produce the industrial compounds according to the claims that follow.

The following are examples aimed at better explaining the subject matter of the present invention.

### EXAMPLES

### 1 Rigidity and resiliency

Table 1 lists some characteristics of polypropylene without and with ethylene comonomer in various concentrations: the polymers being considered have comparable fluidity values and their predominant technological destination relates to their transformation by injection molding.

All the polypropylene types exemplified in Table 1 have impact resistance characteristics that are insufficient to be polymeric matrices that are interesting for being modified with fillers and/or reinforcements, the purpose of which is to reach higher rigidity values.

The aim of the present invention is to modify the polypropylene matrix in order to obtain an optimum performance balance so as to manufacture products that require high rigidity and impact resistance values at the same time.

**Table 1: Physical-mechanical behavior of polypropylene homopolymer and of polypropylene containing ethylene comonomer.**

| **PROPERTIES OF DIFFERENT TYPES OF POLYPROPYLENE** | | | | | | |
|---|---|---|---|---|---|---|
| *polymeric matrices* | | reference | 13/258-2 | 13/267-5 | 13/267-1 | 13/217-1 |
| Moplen V 30 G | | PP homopolymer | 100 | | | |
| Clyrell EC 340 Q | | PP copolymer high-resiliency | | 100 | | |
| PP Ineos 500 GA nat. | | PP copolymer in blocks | | | 100 | |
| Dow Inspire PPc 706-21 NA / HP | | PP copolymer in blocks | | | | 100 |
| total | | | 100 | 100 | 100 | 100 |
| specimen provision technology | | | injection molding from granules | | | |

| CHARACTERIZATION | | | | | | |
|---|---|---|---|---|---|---|
| - tensile strength | ISO 527 | | | | | |
| - yield strength | v = 5 mm/' | MPa | 32.9 | 23 | 20.6 | 26.6 |
| - yield point elongation | | | 8.5 | 13 | 6.8 | 5.1 |
| - ultimate tensile strength | | MPa | not determined | | | |
| - breaking elongation | | % | > 350 | > 350 | > 350 | > 250 |
| - tensile modulus (Young's modulus) | v = 1 mm/' | MPa | 1,852 | 1,150 | 1,308 | 1,767 |
| - impact resistance | ISO 180 1/A | | | | | |
| - Impact IZOD at 23 °C - with notch | | KJ/m² | 4.1 | 22 | 47.2 | 8.3 |
| - Impact IZOD at - 20 °C - with notch | | KJ/m² | 1.7 | 4.3 | 9.5 | 4.8 |
| - Fluidity = MFI | ISO 1133 | g/10' | 20.1 | 22 | 18.3 | 22.1 |

### 2 Modification of performance by using high-resiliency polymers

Ethylene-propylene copolymers with appropriate rheology in the molten state, among these in particular those with a partially crystalline morphology such as POE (Poly Olefin Elastomers), if used in concentrations compatible with the preservation of suitable rigidity values, provide the thermoplastic matrices of polypropylene nature with important benefits in terms of increasing their impact resistance.

The innovative elements reside:
- in the choice of polymeric modifiers, which have a viscosity in the molten state that is high enough to allow their dispersion and distribution in the thermoplastic matrix
- in the use of compatibility promoters which, by improving affinity between the matrix phase and the modifier phase, are capable of avoiding coalescence phenomena during transformation to the molten state in the presence of high flow gradients
- in the use of fillers, which supports the reduction in rigidity as a consequence of the use of the modifying polymers with elastomeric behavior (such as POE).

The following Table 2 exemplifies the variations undergone by matrices of polypropylene (PP) with POE modifiers.

**Table 2: Effects of the addition of elastomeric modifier on PP copolymer matrices.**

| **PROPERTIES OF MIXTURES OF DIFFERENT TYPES OF POLYPROPYLENE WITH POE** | | | | | | |
|---|---|---|---|---|---|---|
| | | reference | 13/267-1 | 13/217-1 | 13/258-6 | 13/258-1 |
| *polymeric matrices* | | | | | | |
| PP lneos 500 GA nat. | | copolymer in blocks | 100 | | 60 | |
| Dow Inspire PPc 706-21 NA / HP | | PP copolymer in blocks | | 100 | 31 | 77.6 |

| *polymeric modifier for resiliency increase* | | | | | | |
|---|---|---|---|---|---|---|
| Dow Affinity EG 8200 (POE) | | Poly Olefin Elastomer | | | 9 | 22.4 |
| total | | | 100 | 100 | 100 | 100 |
| Type of mixing in extruder | | | none | none | molten | molten |

| specimen provision technology | | injection molding from granule | | | | |
|---|---|---|---|---|---|---|
| CHARACTERIZATION | | | | | | |
| - tensile strength | ISO 527 | | | | | |
| - yield strength | v = 5 mm/' | MPa | 20.6 | 26.6 | 18.6 | 17.1 |
| - yield point elongation | | | 6.8 | 5.1 | 7.5 | 7.5 |
| - ultimate tensile strength | | MPa | | | | |
| - breaking elongation | | % | > 350 | > 250 | > 350 | > 350 |
| - tensile modulus (Young's modulus) | v = I mm/' | MPa | 1,308 | 1,767 | 1,134 | 1,322 |
| - impact resistance | ISO 180 1/A | | | | | |
| - Impact IZOD at 23 °C - with notch | | KJ/m² | 47.2 | 8.3 | 44.1 | 48.9 |
| - Impact IZOD at - 20 °C - with notch | | KJ/m² | 9.5 | 4.8 | 10 | 47.1 |
| - Fluidity = MFI | ISO II33 | g/10' | 18.3 | 22.1 | 16.6 | 13.8 |

### 3 Addition of fillers

As described above, in order to compensate for the loss in rigidity caused to the PP matrix by the use of resilient polymeric modifiers, inorganic fillers are used. These fillers impart different effects as a consequence:
- of the nature of the filler;
- of the morphology and particle size of the filler;
- of the distribution and dispersion effectiveness of the filler in the matrix polymer;
- of the use of compatibility promoters, the effectiveness of which depends:
   - on the variation of the surface tension of the filler
   - on the possibility of providing bonds, even low-energy bonds (such as hydrogen bonds), between the filler and the polymeric system.

The innovative elements of the present invention reside:
- in the use of micron (micrometer) and submicron (angstrom) size fillers;
- in the management of the compounding process parameters (high shear for short times);
- in the use of compatibility promoters with maleic anhydride and/or of a silane nature and/or of polycaprolactones.

The following Table 3 exemplifies the beneficial effects achieved on the performance of a PP matrix with simultaneous use:
a) of impact resistance modifier (POE polymer);
b) of calcium carbonate in elementary form of a few micrometers (10⁻⁶ meters) or of a few angstrom (10⁻¹⁰ meters)
of a compatibility promoter with functions as a modifier of the tension of the surfaces of the polymer, of the modifier and of the filler (functionalized with maleic anhydride).

**Table 3: Effect on the performance of PP for use as an impact modifier, filler and compatibility promoter.**

| | formulation reference | DESCRIPTION | | | |
|---|---|---|---|---|---|
| *a)* | 11 / 256 - 1 | copo PP / POE / maleic adduct / nanoCaCO₃ | | | |
| *b)* | 11 / 256 - 2 | copo PP / POE / CaCO₃ | | | |

| | | | | **a)** | **b)** |
|---|---|---|---|---|---|
| TEST matrix polymer | | components | | % | |
| PPC Inspire 706-21 NA HP nat polymeric modifier | | PP | | 72.6 | 70.6 |
| Engage 8842 nat. filler | | POE | | 20.4 | 19.4 |
| Nano CaCO₃ | | nano filler | | 5 | |
| CaCO₃ filler compatibility promoter | | filler | | | 10 |
| Compoline CO/LA-MF | | maleic adduct | | 2 | |

| MECHANICAL **PROPERTIES** | | METHOD | UNIT | | |
|---|---|---|---|---|---|
| Yield strength | | | MPa | 17.5 | 16.7 |
| Ultimate tensile strength | | ASTM D 638 | MPa | n/a | n/a |
| Breaking elongation | | | % | > 350 | > 350 |
| Tensile modulus | | | MPa | 1190 | 1432 |
| Flexural modulus | | ASTM D 790 | MPa | 986 | 1177 |
| Maximum flexural load | | | MPa | 23.3 | 26.8 |
| | with notch at 23 °C | ASTM D 256 | J/m | 716.1 | 573.7 |
| IZOD impact | without notch at 23 °C | | J/m | NB | NB |
| | with notch at - 20 °C | | J/m | 404.2 | 143.7 |

| THERMAL **PROPERTIES** | | | | | |
|---|---|---|---|---|---|
| HDT | 1820 KPa | ASTM D 648 | °C | 76.8 | 93.4 |

| PHYSICAL PROPERTIES | | | | | |
|---|---|---|---|---|---|
| Ash | 1 h at 630 °C | | % | 4.9 | 10.1 |
| MFI | 216 Kg - 230 °C | ASTM D 1238 | g/10' | 13.3 | 14.5 |

The performance set of composite materials containing a polypropylene matrix, a polymeric modifier and variable percentages of talc filler in micronized form, shown in the following Table 4, provides evidence of the containment of the resiliency loss together with the increase in rigidity.

**Table 4: Trend of mechanical performance of rigidity and resiliency as concentration varies**

| effect of the concentration of micronic filler on the performance of impact resistant PP compounds | | reference | 14006-0 | 13 182 - 7 | 13 182-8 | 13 182-9 |
|---|---|---|---|---|---|---|
| raw materials | poly alpha olefin / PP copolymer ratio | | 0.34 | 0.34 | 0.34 | 0.34 |
| DOW Inspire 706-21 NA HP natural | | | 74.6 | 65.7 | 58.3 | 50.9 |
| DOW Engage 8842 Natural | | | 25.4 | 22.6 | 20.0 | 17.4 |
| talc NTT05 - batch X0269 | | | - | 10.0 | 20.0 | 30.0 |
| total | | | 100 | 100 | 100 | 100 |

| compounding phase | | unit of measure | Clextral B 21 twin-screw extruder | | | |
|---|---|---|---|---|---|---|
| - type of feed | | | dry-blend | on polymer mix in the molten state | | |
| - temperature profile | | °C | 150÷210 | 150 ÷ 200 | 150 ÷ 200 | 150 ÷ 200 |
| - screw rotation rate | | rpm | 450 | 450 | 450 | 450 |
| - electric power absorption | | kWh | 10.5 | 9.8 | 9.6 | 9.4 |
| - pressure on reduction unit | | bar | 16 | 18 | 19 | 20 |
| - flow rate | | kg/hour | 7.0 | 7.0 | 7.0 | 7.0 |

| injection molding of granules in standardized specimens | | | Arburg Allrounder 221/75/350 injection press | | | |
|---|---|---|---|---|---|---|
| - cylinder temperatures | | °C | 180÷200 | | | |
| - mold temperature | | °C | 50 | | | |

| CHARACTERIZATION | method | | | | | |
|---|---|---|---|---|---|---|
| - maximum flexural load | ISO 178 | MPa | 18.5 | 23.2 | 25.7 | 26.9 |
| - flexural modulus of elasticity | | MPa | 795 | 1353 | 1865 | 2412 |
| - Impact resistance lzod @ 23 °C - with notch | ISO 180/1A | kJ/m² | 47.5 | 48.4 | 38.0 | 25.9 |
| - Impact resistance lzod @ - 20°C - with notch | | kJ/m² | 50.2 | 27.1 | 13.3 | 5.5 |
| - density @ 23 °C | ISO 1183 | g/cm³ | 0.8919 | 0.9646 | 1.0360 | 1.1215 |
| - ash content in muffle | 1 h at 630°C | % | 0.2 | 10.7 | 20.0 | 29.7 |
| - hot deflection temperature H.D.T. @ 1820 kPa | ISO 75 | °C | 44.9 | 16.2 | 14.6 | 10.9 |
| - fluidity MFI at 230 °C with 2.16 kg weight | ISO 1113 | g/10' | 13.1 | 13.0 | 12.8 | 10.5 |

Types of talc with different particle size, dispersed and distributed during mixing in the molten state in a matrix of PP modified with elastomeric polymer, contribute differently to the performance blend of rigidity and resiliency, usually associating lower rigidity with a higher resiliency value.

According to the results of the present invention it is possible to associate a better balance of rigidity and resiliency with equal density by using the same mixing technology, the same combination of PP matrix and modifier, using a more micronized talc filler.

**Table 5: Effect of the rigidity and resiliency performance in compounds of PP with POE, filled with talc of different particle size.**

| effect of the concentration of micronic filler on the performance of impact resistant PP compounds | | reference | 13 182 - 2 | 13 182 - 5 | 13 182-8 |
|---|---|---|---|---|---|
| raw materials | PPc / alpha polyolefin modifier ratio | | 0.36 | 0.36 | 036 |
| DOW Inspire 706-21 NA HP natural | PP copolymer | | 58.3 | 58.3 | 58.3 |
| DOW Engage 8842 Natural | polymeric modifier | | 21.0 | 21.0 | 21.0 |
| talc HTPIC - X0259 | D₅₀ = < 2 µ | | 20.7 | - | - |
| talc HTP ultra 5C | D50 = < 1 µ | | - | 20.7 | - |
| talc NTT05 - X0269 | D₅₀ = < 0.5 µ | | - | - | 207 |
| total | | | 100 | 100 | 100 |

| compounding phase | | unit of measure | Clextral B 21 twin-screw extruder | | |
|---|---|---|---|---|---|
| - type of feed | | | on mix of polymers in the molten state | | |
| - temperature profile | | °C | 150 ÷ 200 | 150 ÷ 200 | 150 ÷ 200 |
| - screw rotation rate | | rpm | 450 | 450 | 450 |
| - electric power absorption | | kWh | 9.6 | 9.6 | 9.6 |
| - pressure on reduction unit | | bar | 17 | 20 | 19 |
| - flow rate | | kg/hour | 70 | 7.0 | 7.0 |

| injection molding of standardized powder granules | | | Arburg Allrounder 221/75/350 injection press | | |
|---|---|---|---|---|---|
| - cylinder temperatures | | °C | 180 / 200 | | |
| - mold temperature | | °C | 50 | | |

| CHARACTERIZATION | method | | | | |
|---|---|---|---|---|---|
| - maximum flexural load | ISO 178 | MPa | 23.5 | 24.7 | 25.7 |
| - flexural modulus of elasticity | | MPa | 1594 | 1683 | 1865 |
| - Impact resistance Izod @ 23 °C - with notch | ISO 180/1A | kJ/m² | 51.2 | 53.5 | 38.0 |
| - Impact resistance Izod @ - 20 °C - with notch | ISO 180/1A | kJ/m² | 27.5 | 32.6 | 13.3 |
| - density @ 23 °C | ISO 75 | °C | 1.0398 | 1.0363 | 1.0360 |
| - ash content in muffle | ISO 1183 | g/cm³ | 20.6 | 20.1 | 20.0 |
| - hot deflection temperature H.D.T. @ 1820 kPa | 1 h at 630 °C | % | 55.7 | 55.7 | 595 |
| - fluidity MFI at 230 °C with 2.16 kg weight | ISO 1133 | cc/10' | 12.7 | 12.5 | 12.8 |

Innovative elements with respect to current knowledge are constituted by the results, obtained by the use in the matrix of PP modified with POE with the prospect of improving resiliency without a significant loss in rigidity, of different concentrations of nanofiller of calcium carbonate, as shown in Table 6.

**Table 6: Effect of different concentrations of CaCO₃ as a nano-filler on rigidity and resiliency.**

| impact modified PP, stiffened with calcium carbonate with NANO morphology | | | 11/107 - 1 | 11/107 - 2 | 11/107 - 3 |
|---|---|---|---|---|---|
| raw materials | | | | | |
| - PP Inspire 706-21 NA HP natur. | PP copolymer | | 76.3 | 73.6 | 70.9 |
| - DOW Engage 8842 Natural | POE impact modifier | | 20.7 | 19.9 | 19.1 |
| - nano CaCO₃ | isotropic filler | | | 3.5 | 7 |
| - maleic adduct | compatibility promoter | | 3 | 3 | 3 |
| total | | | 100 | 100 | 100 |

| - CHARACTERIZATION - | method | unit | | | |
|---|---|---|---|---|---|
| MECHANICAL PROPERTIES | | | | | |
| Yield strength | ISO 527 | MPa | 16.5 | 16.5 | 16.4 |
| Breaking elongation | 5 mm / min | % | >350 | >350 | >350 |
| Tensile modulus | | MPa | 1104 | 1153 | 1181 |
| Impact IZOD (with notch at 23 °C) | ISO 180 2,75J | kJ/m² | 47.0 | 43.2 | 37.5 |
| Impact IZOD (with notch at - 20 °C) | mace | kJ/m² | 25.8 | 16.7 | 11.5 |

| THERMAL PROPERTIES | | | | | |
|---|---|---|---|---|---|
| HDT - method A | ISO 75 | °C | 49.0 | 49.3 | 49.5 |
| TGA (% of CNT) | ISO 11358 | % | 0.0 | 3.2 | 6.4 |

| PHYSICAL PROPERTIES | | | | | |
|---|---|---|---|---|---|
| Density | ISO 1183 | g/ml | 0.8934 | 0.9128 | 0.9339 |
| Fluidity MFI - 230 °C/2.16 kg | ISO 1133 | g/10' | 14.5 | 13.3 | 12.3 |

The PP matrices, improved in their resiliency by adding elastomeric polymers (POE), are interesting polyphasic systems capable of containing nanoreinforcements (carbon nanotubes), with the prospect of increasing rigidity and obtaining an antistatic behavior, as is evident from the examination of the performance listed in Table 7.

For high contents of carbon nanotubes, electrically conducting thermoplastic composite materials are obtained which have a shielding effect against radio frequencies and electromagnetic waves.

**Table 7: Modification of polyphasic polymeric systems with carbon nanotubes.**

| effect of the use of carbon nanotubes in impact modified polypropylene matrix | | | 11/107 - 1 | 11/107 - 5 | 11/107 - 6 |
|---|---|---|---|---|---|
| raw materials | nature | | | | |
| - Inspire 706-21 NA HP | PP copolymer | | 76.3 | 74.3 | 72.4 |
| - DOW Engage 8842 | POE polymeric modifier | | 20.7 | 20.2 | 19.6 |
| - Carbon nanotubes | anisotropic nanofiller | | | 2.5 | 5 |
| - maleic adduct | polymeric compatibility promoter | | 3 | 3 | 3 |
| total | | | 100 | 100 | 100 |

| - CHARACTERIZATION - | method | unit | | | |
|---|---|---|---|---|---|
| MECHANICAL PROPERTIES | | | | | |
| Yield strength | ISO 527 | MPa | 16.5 | 16.9 | 17.0 |
| Ultimate tensile strength | | MPa | N.B. | N.B. | 14.5 |
| Breaking elongation | 5 mm / min | % | >350 | >350 | 130.7 |
| Tensile modulus | | MPa | 1104 | 1119 | 1107 |
| Impact lzod (with notch at 23 °C) | ISO 180 2.75 J mace | kJ/m² | 47.0 | 34.9 | 26.6 |
| Impact lzod (with notch at - 20 °C) | | kJ/m² | 25.8 | 17.4 | 14.9 |

| THERMAL PROPERTIES | | | | | |
|---|---|---|---|---|---|
| HDT - method A | ISO 75 | °C | 49.0 | 48.6 | 48.2 |
| TGA (% of CNT) | ISO 11358 | % | 0.0 | 2.3 | 4.6 |
| PHYSICAL PROPERTIES | | | | | |
| Density | ISO 1183 | g/ml | 0.8934 | 0.9063 | 0.9179 |
| Fluidity (MFI) - 230 °C/2.16 kg | ISO 1133 | g/10' | 14.5 | 8.7 | 5.6 |

| ELECTRICAL PROPERTIES | | | | | |
|---|---|---|---|---|---|
| Surface resistivity | ASTM D 257 | ohm x cm | > 10¹⁶ | 1.6 x 10¹⁴ | 1 x 10¹⁰ |

## Claims

1. A process for the production of high-resiliency rigid material, **characterized in that** it comprises the step of mixing and dispersing in a molten state in a mixer the following compounds:
- polymers of isotactic propylene, selected from the group constituted by: propylene homopolymers and propylene copolymers;
- modifying polymers selected from the group constituted by: polymers of poly alpha olefins (POE), ethylene propylene rubbers (EPR), ethylene propylene dimer rubbers (EPDM);
- compatibility promoters selected from the group constituted by: olefin polymers functionalized with maleic anhydride, olefin polymers functionalized with silanes, ethylene-acrylic acid (EAA) copolymers, polycaprolactones;
- additives selected from the group constituted by: phenols, phosphites, ethers, thioethers, benzophenones, benzotriazole derivatives, sterically hindered amines, halogenated additives, melamines, melamine salts, salts of phosphorus derivatives, glyceryl monostearate, stearic salts of calcium, stearic salts of zinc, organic compounds, inorganic salts, inorganic oxides, carbon blacks;
- fillers selected from the group constituted by: inorganic fillers having an isotropic structure and fillers having an anisotropic structure;
wherein said fillers are nanofillers having a particle size of a few tens of angstroms;
and wherein said process provides for:
- a temperature comprised in the range of 120 - 230°C;
- a rotation rate of the screws that compose said mixer comprised in the range of 125-1250 rpm.

2. The process according to claim 1, wherein said step of mixing and dispersing in the molten state occurs gravimetrically or volumetrically.

3. A high-resiliency rigid composite material, **characterized in that** it comprises:
- polymers of isotactic propylene, selected from the group constituted by: propylene homopolymers and propylene copolymers;
- modifying polymers selected from the group constituted by: polymers of poly alpha olefins (POE), ethylene propylene rubbers (EPR), ethylene propylene dimer rubbers (EPDM);
- compatibility promoters selected from the group constituted by: olefin polymers functionalized with maleic anhydride, olefin polymers functionalized with silanes, ethylene-acrylic acid (EAA) copolymers, polycaprolactones;
- additives selected from the group constituted by: phenols, phosphites, ethers, thioethers, benzophenones, benzotriazole derivatives, sterically hindered amines, halogenated additives, melamines, melamine salts, salts of phosphorus derivatives, glyceryl monostearate, stearic salts of calcium, stearic salts of zinc, organic compounds, inorganic salts, inorganic oxides, carbon blacks;
- fillers selected from the group constituted by: inorganic fillers having an isotropic structure and fillers having an anisotropic structure;
wherein said fillers are nanofillers having a particle size of a few tens of angstroms.

4. The process according to one or more of the preceding claims 1 and 2, wherein:
- said propylene homopolymers are present in the range of 45-85% by weight;
- said propylene copolymers are present in the high-resiliency rigid composite material in the range of 45-90% by weight;
- said poly alpha olefin (POE) polymers are present in the range of 10-30% by weight;
- said ethylene propylene rubbers (EPR) are present in the range of 5-20% by weight;
- said ethylene propylene dimer rubbers (EPDM) are present in the range of 5-20% by weight;
- said olefin polymers functionalized with maleic anhydride comprise maleic anhydride that is present in the range of 0.5-0.8% by weight;
- said olefin polymers functionalized with maleic anhydride are present in the range comprised between 2 and 5% by weight;
- said olefin polymers functionalized with silanes are present in the range of 0.5-5% by weight;
- said ethylene acrylic acid (EAA) copolymers are present in the range of 6-12% by weight;
- said polycaprolactones are present in the range of 0.5-2% by weight;
- said additives are present in the range comprised between 0.1 and 0.5% by weight;
- said inorganic fillers with isotropic structure are selected from the group constituted by: high purity micronized talc in calcium and magnesium silicates, and calcium carbonate; where:
- said micronized talc with high purity in silicates of calcium and magnesium is present in the range of 0.5-12% by weight;
- said calcium carbonate has the form of a nanofiller and is present in the range of 0.1-7.5% by weight;
- said fillers with anisotropic structure are selected from the group constituted by carbon nanotubes and glass fiber and are present in the range between 0.5 and 7.5% by weight.

5. The process according to one or more of the preceding claims 1, 2, and 4, wherein:
- said polymers of isotactic propylene are copolymers of propylene in blocks, with an average content of ethylene, present in a percentage equal to 71.7% by weight of the total,
- said modifier polymers are polymers of poly alpha olefins (POE), with crystalline phase, present in a percentage equal to 20.5% by weight of the total,
- said compatibility promoters are olefin polymers functionalized with maleic anhydride, present in a percentage equal to 2.5% by weight of the total,
- said additives are selected from the group constituted by: phenols, phosphites, thioethers, and are present in a percentage equal to 0.3% by weight of the total,
- said fillers are constituted by nano calcium carbonate, present in a percentage equal to 5% by weight of the total.

6. The process according to one or more of claims 1, 2, and 4, wherein:
- said polymers of the isotactic propylene are copolymers of propylene in blocks, with an average content of ethylene, present in a percentage equal to 71.7% by weight of the total,
- said modifying polymers are polymers of poly alpha olefins (POE), with crystalline phase, present in a percentage equal to 20.5% by weight of the total,
- said compatibility promoters are olefin polymers functionalized with maleic anhydride, present in the percentage equal to 2.5% by weight of the total,
- said additives are selected from the group constituted by: phenols, phosphites, thioethers, and are present in a percentage equal to 0.3% by weight of the total,
- said fillers are constituted by carbon nanotubes that are present in a percentage equal to 5% by weight of the total.

7. The material according to claim 3, wherein:
- said propylene homopolymers are present in the range of 45-85% by weight;
- said propylene copolymers are present in the high-resiliency rigid composite material in the range of 45-90% by weight;
- said poly alpha olefin (POE) polymers are present in the range of 10-30% by weight;
- said ethylene propylene rubbers (EPR) are present in the range of 5-20% by weight;
- said ethylene propylene dimer rubbers (EPDM) are present in the range of 5-20% by weight;
- said olefin polymers functionalized with maleic anhydride comprise maleic anhydride that is present in the range of 0.5-0.8% by weight;
- said olefin polymers functionalized with maleic anhydride are present in the range comprised between 2 and 5% by weight;
- said olefin polymers functionalized with silanes are present in the range of 0.5-5% by weight;
- said ethylene acrylic acid (EAA) copolymers are present in the range of 6-12% by weight;
- said polycaprolactones are present in the range of 0.5-2% by weight;
- said additives are present in the range comprised between 0.1 and 0.5% by weight;
- said inorganic fillers with isotropic structure are selected from the group constituted by: high purity micronized talc in calcium and magnesium silicates, and calcium carbonate; where:
- said micronized talc with high purity in silicates of calcium and magnesium is present in the range of 0.5-12% by weight;
- said calcium carbonate has the form of a nanofiller and is present in the range of 0.1-7.5% by weight;
- said fillers with anisotropic structure are selected from the group constituted by carbon nanotubes and glass fiber and are present in the range between 0.5 and 7.5% by weight.

8. The material according to one or more of the preceding claims 3 and 7, wherein:
- said polymers of isotactic propylene are copolymers of propylene in blocks, with an average content of ethylene, present in a percentage equal to 71.7% by weight of the total,
- said modifier polymers are polymers of poly alpha olefins (POE), with crystalline phase, present in a percentage equal to 20.5% by weight of the total,
- said compatibility promoters are olefin polymers functionalized with maleic anhydride, present in a percentage equal to 2.5% by weight of the total,
- said additives are selected from the group constituted by: phenols, phosphites, thioethers, and are present in a percentage equal to 0.3% by weight of the total,
- said fillers are constituted by nano calcium carbonate, present in a percentage equal to 5% by weight of the total.

9. The material according to one or more of claims 3 and 7, wherein:
- said polymers of the isotactic propylene are copolymers of propylene in blocks, with an average content of ethylene, present in a percentage equal to 71.7% by weight of the total,
- said modifying polymers are polymers of poly alpha olefins (POE), with crystalline phase, present in a percentage equal to 20.5% by weight of the total,
- said compatibility promoters are olefin polymers functionalized with maleic anhydride, present in the percentage equal to 2.5% by weight of the total,
- said additives are selected from the group constituted by: phenols, phosphites, thioethers, and are present in a percentage equal to 0.3% by weight of the total,
- said fillers are constituted by carbon nanotubes that are present in a percentage equal to 5% by weight of the total.

10. Use of the high-resiliency rigid composite material according to one or more of the preceding claims 3, 7, 8 and 9 for sheets for thermoforming by extrusion, injection molding of technical cases, molding of containers for electrical/electronic instruments, injection molding of mechanical instruments, injection molding for containers for protecting electronic systems and for appliances, injection molding of components for the automotive sector.

## Patentansprüche

1. Ein Verfahren zur Erzeugung von hochelastischem, festen Material, **dadurch gekennzeichnet, dass** es den Schritt Mischen und Dispergieren der folgenden Verbindungen in geschmolzenem Zustand in einem Mischer umfasst:
- Polymere von isotaktischem Propylen, gewählt aus der Gruppe bestehend aus: Propylen-Homopolymeren und Propylen-Copolymeren;
- Modifizierende Polymere gewählt aus der Gruppe bestehend aus: Polymeren von Poly-Alpha-Olefinen (POE), Ethylen-Propylen-Kautschuken (EPR), Ethylen-Propylen-Dimer-Kautschuken (EPDM);
- Verträglichkeitsverbesserer gewählt aus der Gruppe bestehend aus: Olefinpolymeren funktionalisiert mit Maleinsäureanhydrid, Olefinpolymeren funktionalisiert mit Silanen, Ethylen-Acrylsäure (EAA) -Copolymeren, Polycaprolactonen;
- Zusatzstoffe gewählt aus der Gruppe bestehend aus: Phenolen, Phosphiten, Ethern, Thioethern, Benzophenonen, Benzotriazolderivaten, sterisch gehinderten Aminen, halogenierten Zusatzstoffen, Melaminen, Melaminsalzen, Salzen von Phosphorderivaten, Glycerylmonostearat, Sterinsäuresalzen von Calcium, Sterinsäuresalzen von Zink, organischen Verbindungen, anorganischen Salzen, anorganischen Oxiden, Rußen (Carbon Blacks);
- Füllstoffe gewählt aus der Gruppe bestehend aus: anorganischen Füllstoffen mit einer isotropen Struktur und Füllstoffen mit einer anisotropen Struktur;
worin die genannten Füllstoffe Nanofüllstoffe mit einer Partikelgröße von einigen Dutzend Angström sind;
und worin das genannte Verfahren folgendes bereitstellt:
- eine Temperatur im Bereich von 120 - 230°C;
- eine Rotationsrate der Schnecken, die den genannten Mischer bilden, im Bereich von 125 - 1250 rpm.

2. Das Verfahren gemäß Anspruch 1, worin der genannte Schritt Mischen und Dispergieren in geschmolzenem Zustand gravimetrisch oder volumetrisch erfolgt.

3. Ein hochelastisches, festes Verbundmaterial, **dadurch gekennzeichnet, dass** es Folgendes umfasst:
- Polymere von isotaktischem Propylen, gewählt aus der Gruppe bestehend aus: Propylen-Homopolymeren und Propylen-Copolymeren;
- Modifizierende Polymere gewählt aus der Gruppe bestehend aus: Polymeren von Poly-Alpha-Olefinen (POE), Ethylen-Propylen-Kautschuken (EPR), Ethylen-Propylen-Dimer-Kautschuken (EPDM);
- Verträglichkeitsverbesserer gewählt aus der Gruppe bestehend aus: Olefinpolymeren funktionalisiert mit Maleinsäureanhydrid, Olefinpolymeren funktionalisiert mit Silanen, Ethylen-Acrylsäure (EAA) -Copolymeren, Polycaprolactonen;
- Zusatzstoffe gewählt aus der Gruppe bestehend aus: Phenolen, Phosphiten, Ethern, Thioethern, Benzophenonen, Benzotriazolderivaten, sterisch gehinderten Aminen, halogenierten Zusatzstoffen, Melaminen, Melaminsalzen, Salzen von Phosphorderivaten, Glycerylmonostearat, Sterinsäuresalzen von Calcium, Sterinsäuresalzen von Zink, organischen Verbindungen, anorganischen Salzen, anorganischen Oxiden, Rußen (Carbon Blacks);
- Füllstoffe gewählt aus der Gruppe bestehend aus: anorganischen Füllstoffen mit einer isotropen Struktur und Füllstoffen mit einer anisotropen Struktur;
worin die genannten Füllstoffe Nanofüllstoffe mit einer Partikelgröße von einigen Dutzend Angström sind.

4. Das Verfahren gemäß einem oder mehreren der vorhergehenden Ansprüche 1 und 2, worin:
- die genannten Propylen-Homopolymere im Bereich von 45-85 Gewichts% vorhanden sind;
- die genannten Propylen-Copolymere in dem hochelastischen, festen Verbundmaterial im Bereich von 45-90 Gewichts% vorhanden sind;
- die genannten Poly-Alpha-Olefin (POE) Polymere im Bereich von 10-30 Gewichts% vorhanden sind;
- die genannten Ethylen-Propylen-Kautschuke (EPR) im Bereich von 5-20 Gewichts% vorhanden sind;
- die genannten Ethylen-Propylen-Dimer-Kautschuke (EPDM) im Bereich von 5-20 Gewichts% vorhanden sind;
- die genannten mit Maleinsäureanhydrid funktionalisierten Olefinpolymere Maleinsäureanhydrid umfassen, das im Bereich von 0,5-0,8 Gewichts% vorhanden ist;
- die genannten mit Maleinsäureanhydrid funktionalisierten Olefinpolymere im Bereich zwischen 2 und 5 Gewichts% vorhanden sind;
- die genannten mit Silanen funktionalisierten Olefinpolymere im Bereich von 0,5-5 Gewichts% vorhanden sind;
- die genannten Ethylenacrylsäure (EAA) -Copolymere im Bereich von 6-12 Gewichts% vorhanden sind;
- die genannten Polycaprolactone im Bereich von 0,5-2 Gewichts% vorhanden sind;
- die genannten Zusatzstoffe im Bereich zwischen 0,1 und 0,5 Gewichts% vorhanden sind;
- die genannten anorganischen Füllstoffe mit isotroper Struktur gewählt sind aus der Gruppe bestehend aus: hochreinem mikronisierten Talkum in Calcium- und Magnesiumsilikaten, und Calciumcarbonat; worin:
- das genannte hochreine mikronisierte Talkum in Silikaten von Calcium und Magnesium im Bereich von 0,5-12 Gewichts% vorhanden ist;
- das genannte Calciumcarbonat die Form eines Nanofüllstoffs hat und im Bereich von 0,1-7,5 Gewichts% vorhanden ist;
- die genannten Füllstoffe mit anisotroper Struktur gewählt sind aus der Gruppe bestehend aus Kohlenstoffnanoröhrchen und Glasfaser und im Bereich zwischen 0,5 und 7,5 Gewichts% vorhanden sind.

5. Das Verfahren gemäß einem oder mehreren der vorhergehenden Ansprüche 1, 2 und 4, worin:
- die genannten Polymere von isotaktischem Propylen Copolymere von Propylen in Blocks sind, mit einem durchschnittlichen Gehalt von Ethylen, vorhanden in einem Prozentsatz entsprechend 71,7 Gewichts% des Gesamtgewichts,
- die genannten Modifikatorpolymere Polymere von Poly-Alpha-Olefinen (POE) sind, mit kristalliner Phase, vorhanden in einem Prozentsatz entsprechend 20,5 Gewichts% des Gesamtgewichts,
- die genannten Verträglichkeitsverbesserer Olefinpolymere funktionalisiert mit Maleinsäureanhydrid sind, vorhanden in einem Prozentsatz entsprechend 2,5 Gewichts% des Gesamtgewichts,
- die genannten Zusatzstoffe gewählt sind aus der Gruppe bestehend aus: Phenolen, Phosphiten, Thioethern, und in einem Prozentsatz entsprechend 0,3 Gewichts% des Gesamtgewichts vorhanden sind,
- die genannten Füllstoffe aus Nano-Calciumcarbonat bestehen, vorhanden in einem Prozentsatz entsprechend 5 Gewichts% des Gesamtgewichts.

6. Das Verfahren gemäß einem oder mehreren der Ansprüche 1, 2 und 4, worin:
- die genannten Polymere des isotaktischen Propylens Copolymere von Propylen in Blocks sind, mit einem durchschnittlichen Gehalt von Ethylen, vorhanden in einem Prozentsatz entsprechend 71,7 Gewichts% des Gesamtgewichts,
- die genannten modifizierenden Polymere Polymere von Poly-Alpha-Olefinen (POE) sind, mit kristalliner Phase, vorhanden in einem Prozentsatz entsprechend 20,5 Gewichts% des Gesamtgewichts,
- die genannten Verträglichkeitsverbesserer Olefinpolymere sind, funktionalisiert mit Maleinsäureanhydrid, vorhanden im Prozentsatz entsprechend 2,5 Gewichts% des Gesamtgewichts,
- die genannten Zusatzstoffe gewählt sind aus der Gruppe bestehend aus: Phenolen, Phosphiten, Thioethern, und in einem Prozentsatz entsprechend 0,3 Gewichts% des Gesamtgewichts vorhanden sind,
- die genannten Füllstoffe aus Kohlenstoffnanoröhrchen bestehen, die in einem Prozentsatz entsprechend 5 Gewichts% des Gesamtgewichts vorhanden sind.

7. Das Material gemäß Anspruch 3, worin:
- die genannten Propylen-Homopolymere im Bereich von 45-85 Gewichts% vorhanden sind;
- die genannten Propylen-Copolymere in dem hochelastischen festen Verbundmaterial im Bereich von 45-90 Gewichts% vorhanden sind;
- die genannten Poly-Alpha-Olefin (POE) Polymere im Bereich von 10-30 Gewichts% vorhanden sind;
- die genannten Ethylen-Propylen-Kautschuke (EPR) im Bereich von 5-20 Gewichts% vorhanden sind;
- die genannten Ethylen-Propylen-Dimer-Kautschuke (EPDM) im Bereich von 5-20 Gewichts% vorhanden sind;
- die genannten mit Maleinsäureanhydrid funktionalisierten Olefinpolymere Maleinsäureanhydrid umfassen, welches im Bereich von 0,5-0,8 Gewichts% vorhanden ist;
- die genannten mit Maleinsäureanhydrid funktionalisierten Olefinpolymere im Bereich zwischen 2 und 5 Gewichts% vorhanden sind;
- die genannten mit Silanen funktionalisierten Olefinpolymere im Bereich von 0,5-5 Gewichts% vorhanden sind;
- die genannten Ethylenacrylsäure (EAA) -Copolymere im Bereich von 6-12 Gewichts% vorhanden sind;
- die genannten Polycaprolactone im Bereich von 0,5-2 Gewichts% vorhanden sind;
- die genannten Zusatzstoffe im Bereich zwischen 0,1 und 0,5 Gewichts% vorhanden sind;
- die genannten anorganischen Füllstoffe mit isotroper Struktur gewählt sind aus der Gruppe bestehend aus: hochreinem mikronisierten Talkum in Calcium- und Magnesiumsilikaten, und Calciumcarbonat; worin:
- das genannte hochreine mikronisierte Talkum in Silikaten von Calcium und Magnesium im Bereich von 0,5-12 Gewichts% vorhanden ist;
- das genannte Calciumcarbonat die Form eines Nanofüllstoffs hat und im Bereich von 0,1-7,5 Gewichts% vorhanden ist;
- die genannten Füllstoffe mit anisotroper Struktur gewählt sind aus der Gruppe bestehend aus Kohlenstoffnanoröhrchen und Glasfaser und im Bereich zwischen 0,5 und 7,5 Gewichts% vorhanden sind.

8. Das Material gemäß einem oder mehreren der vorhergehenden Ansprüche 3 und 7, worin:
- die genannten Polymere von isotaktischem Propylen Copolymere von Propylen in Blocks sind, mit einem durchschnittlichen Gehalt von Ethylen, vorhanden in einem Prozentsatz entsprechend 71,7 Gewichts% des Gesamtgewichts,
- die genannten Modifikatorpolymere Polymere von Alpha-Olefinen (POE) sind, mit kristalliner Phase, vorhanden in einem Prozentsatz entsprechend 20,5 Gewichts% des Gesamtgewichts,
- die genannten Verträglichkeitsverbesserer Olefinpolymere sind, funktionalisiert mit Maleinsäureanhydrid, vorhanden in einem Prozentsatz entsprechend 2,5 Gewichts% des Gesamtgewichts,
- die genannten Zusatzstoffe gewählt sind aus der Gruppe bestehend aus: Phenolen, Phosphiten, Thioethern, und in einem Prozentsatz entsprechend 0,3 Gewichts% des Gesamtgewichts vorhanden sind,
- die genannten Füllstoffe aus Nano-Calciumcarbonat bestehen, vorhanden in einem Prozentsatz entsprechend 5 Gewichts% des Gesamtgewichts.

9. Das Material gemäß einem oder mehreren der Ansprüche 3 und 7, worin:
- die genannten Polymere des isotaktischen Propylens Copolymere von Propylen in Blocks sind, mit einem durchschnittlichen Gehalt von Ethylen, vorhanden in einem Prozentsatz entsprechend 71,7 Gewichts% des Gesamtgewichts,
- die genannten modifizierenden Polymere Polymere von Poly-Alpha-Olefinen (POE) sind, mit kristalliner Phase, vorhanden in einem Prozentsatz entsprechend 20,5 Gewichts% des Gesamtgewichts,
- die genannten Verträglichkeitsverbesserer Olefinpolymere sind, funktionalisiert mit Maleinsäureanhydrid, vorhanden im Prozentsatz entsprechend 2,5 Gewichts% des Gesamtgewichts,
- die genannten Zusatzstoffe gewählt sind aus der Gruppe bestehend aus: Phenolen, Phosphiten, Thioethern, und in einem Prozentsatz entsprechend 0,3 Gewichts% des Gesamtgewichts vorhanden sind,
- die genannten Füllstoffe aus Kohlenstoffnanoröhrchen bestehen, die in einem Prozentsatz entsprechend 5 Gewichts% des Gesamtgewichts vorhanden sind.

10. Verwendung des hochelastischen, festen Verbundmaterials gemäß einem oder mehreren der vorhergehenden Ansprüche 3, 7, 8 und 9 für Folien zur Thermoformung durch Extrusion, Spritzgießen von technischen Gegenständen, Formen von Behältern für elektrische/elektronische Instrumente, Spritzgießen von mechanischen Instrumenten, Spritzgießen für Behälter zum Schutz von elektronischen Systemen und für Geräte, Spritzgießen von Komponenten für die Automobilindustrie.

## Revendications

1. Procédé pour la production d'un matériau rigide haute résilience, **caractérisé en ce qu'**il comprend l'étape de mélange et de dispersion à l'état fondu, dans un mélangeur, les composés suivants :
- des polymères de propylène isotactique, choisis dans le groupe constitué par : les homopolymères de propylène et les copolymères de propylène ;
- des polymères modificateurs choisis dans le groupe constitué par : les polymères de poly(α-oléfine) (POE), les caoutchoucs d'éthylène-propylène (EPR), les caoutchoucs d'éthylène-propylène-dimère (EPDM) ;
- des promoteurs de compatibilité choisis dans le groupe constitué par : les polymères d'oléfine fonctionnalisés avec de l'anhydride maléique, les polymères d'oléfine fonctionnalisés avec des silanes, les copolymères d'éthylène-acide acrylique (EAA), les polycaprolactones ;
- des additifs choisis dans le groupe constitué par : les phénols, les phosphites, les éthers, les thioéthers, les benzophénones, les dérivés de benzotriazole, les amines à encombrement stérique, les additifs halogénés, les mélamines, les sels de mélamine, les sels de dérivés du phosphore, le monostéarate de glycéryle, les sels stéariques de calcium, les sels stéariques de zinc, les composés organiques, les sels inorganiques, les oxydes inorganiques, les noirs de carbone ;
- des charges choisies dans le groupe constitué par : les charges inorganiques ayant une structure isotrope et les charges ayant une structure anisotrope ;
dans lequel lesdites charges sont des nanocharges ayant une granulométrie de quelques dizaines d'angströms ;
et lequel procédé prévoit :
- une température comprise dans la plage allant de 120 à 230°C ;
- une vitesse de rotation des vis qui composent ledit mélangeur comprise dans la plage allant de 125 à 1250 t/min.

2. Procédé selon la revendication 1, dans lequel ladite étape de mélange et de dispersion à l'état fondu a lieu de manière gravimétrique ou volumétrique.

3. Matériau composite rigide haute résilience, **caractérisé en ce qu'**il comprend :
- des polymères de propylène isotactique, choisis dans le groupe constitué par : les homopolymères de propylène et les copolymères de propylène ;
- des polymères modificateurs choisis dans le groupe constitué par : les polymères de poly(α-oléfine) (POE), les caoutchoucs d'éthylène-propylène (EPR), les caoutchoucs d'éthylène-propylène-dimère (EPDM) ;
- des promoteurs de compatibilité choisis dans le groupe constitué par : les polymères d'oléfine fonctionnalisés avec de l'anhydride maléique, les polymères d'oléfine fonctionnalisés avec des silanes, les copolymères d'éthylène-acide acrylique (EAA), les polycaprolactones ;
- des additifs choisis dans le groupe constitué par : les phénols, les phosphites, les éthers, les thioéthers, les benzophénones, les dérivés de benzotriazole, les amines à encombrement stérique, les additifs halogénés, les mélamines, les sels de mélamine, les sels de dérivés du phosphore, le monostéarate de glycéryle, les sels stéariques de calcium, les sels stéariques de zinc, les composés organiques, les sels inorganiques, les oxydes inorganiques, les noirs de carbone ;
- des charges choisies dans le groupe constitué par : les charges inorganiques ayant une structure isotrope et les charges ayant une structure anisotrope ;
dans lequel lesdites charges sont des nanocharges ayant une granulométrie de quelques dizaines d'angströms.

4. Procédé selon une ou plusieurs des précédentes revendications 1 et 2, dans lequel :
- lesdits homopolymères de propylène sont présents à raison de 45 à 85 % en poids ;
- lesdits copolymères de propylène sont présents dans le matériau composite rigide haute résilience à raison de 45 à 90 % en poids ;
- lesdits polymères de poly(α-oléfine) (POE) sont présents à raison de 10 à 30 % en poids ;
- lesdits caoutchoucs d'éthylène-propylène (EPR) sont présents à raison de 5 à 20 % en poids ;
- lesdits caoutchoucs d'éthylène-propylène-dimère (EPDM) sont présents à raison de 5 à 20 % en poids ;
- lesdits polymères d'oléfine fonctionnalisés avec de l'anhydride maléique comprennent de l'anhydride maléique qui est présent à raison de 0,5 à 0,8 % en poids ;
- lesdits polymères d'oléfine fonctionnalisés avec de l'anhydride maléique sont présents à raison de 2 à 5 % en poids ;
- lesdits polymères d'oléfine fonctionnalisés avec des silanes sont présents à raison de 0,5 à 5 % en poids ;
- lesdits copolymères d'éthylène-acide acrylique (EAA) sont présents à raison de 6 à 12 % en poids ;
- lesdits polycaprolactones sont présentes à raison de 0,5 à 2 % en poids ;
- lesdits additifs sont présents à raison de 0,1 à 0,5 % en poids ;
- lesdites charges inorganiques ayant une structure isotrope sont choisies dans le groupe constitué par : le talc micronisé de haute pureté dans des silicates de calcium et de magnésium, et le carbonate de calcium ; où :
- ledit talc micronisé de haute pureté dans des silicates de calcium et de magnésium est présent à raison de 0,5 à 12 % en poids ;
- ledit carbonate de calcium a la forme d'une nanocharge et est présent à raison de 0,1 à 7,5 % en poids ;
- lesdites charges ayant une structure anisotrope sont choisies dans le groupe constitué par les nanotubes de carbone et les fibres de verre et sont présentes à raison de 0,5 à 7,5 % en poids.

5. Procédé selon une ou plusieurs des précédentes revendications 1, 2 et 4, dans lequel :
- lesdits polymères de propylène isotactique sont des copolymères de propylène séquencés, ayant une teneur moyenne en éthylène, présents en un pourcentage égal à 71,7 % en poids du total,
- lesdits polymères modifiés sont des polymères de poly(α-oléfine) (POE), avec une phase cristalline, présents en un pourcentage égal à 20,5 % en poids du total,
- lesdits promoteurs de compatibilité sont des polymères d'oléfine fonctionnalisés avec de l'anhydride maléique, présents en un pourcentage égal à 2,5 % en poids du total,
- lesdits additifs sont choisis dans le groupe constitué par : les phénols, les phosphites, les thioéthers, et sont présents en un pourcentage égal à 0,3 % en poids du total,
- lesdites charges sont constituées de carbonate de calcium de taille nanométrique, présent en un pourcentage égal à 5 % en poids du total.

6. Procédé selon une ou plusieurs des revendications 1, 2 et 4, dans lequel :
- lesdits polymères de propylène isotactique sont des copolymères de propylène séquencés, ayant une teneur moyenne en éthylène, présents en un pourcentage égal à 71,7 % en poids du total,
- lesdits polymères modificateurs sont des polymères de poly(α-oléfine) (POE), avec une phase cristalline, présents en un pourcentage égal à 20,5 % en poids du total,
- lesdits promoteurs de compatibilité sont des polymères d'oléfine fonctionnalisés avec de l'anhydride maléique, présents en un pourcentage égal à 2,5 % en poids du total,
- lesdits additifs sont choisis dans le groupe constitué par : les phénols, les phosphites, les thioéthers, et sont présents en un pourcentage égal à 0,3 % en poids du total,
- lesdites charges sont constituées de nanotubes de carbone qui sont présents en un pourcentage égal à 5 % en poids du total.

7. Matériau selon la revendication 3, dans lequel :
- lesdits homopolymères de propylène sont présents à raison de 45 à 85 % en poids ;
- lesdits copolymères de propylène sont présents dans le matériau composite rigide haute résilience à raison de 45 à 90 % en poids ;
- lesdits polymères de poly(α-oléfine) (POE) sont présents à raison de 10 à 30 % en poids ;
- lesdits caoutchoucs d'éthylène-propylène (EPR) sont présents à raison de 5 à 20 % en poids ;
- lesdits caoutchoucs d'éthylène-propylène-dimère (EPDM) sont présents à raison de 5 à 20 % en poids ;
- lesdits polymères d'oléfine fonctionnalisés avec de l'anhydride maléique comprennent de l'anhydride maléique qui est présent à raison de 0,5 à 0,8 % en poids ;
- lesdits polymères d'oléfine fonctionnalisés avec de l'anhydride maléique sont présents à raison de 2 à 5 % en poids ;
- lesdits polymères d'oléfine fonctionnalisés avec des silanes sont présents à raison de 0,5 à 5 % en poids ;
- lesdits copolymères d'éthylène-acide acrylique (EAA) sont présents à raison de 6 à 12 % en poids ;
- lesdits polycaprolactones sont présentes à raison de 0,5 à 2 % en poids ;
- lesdits additifs sont présents à raison de 0,1 à 0,5 % en poids ;
- lesdites charges inorganiques ayant une structure isotrope sont choisies dans le groupe constitué par : le talc micronisé de haute pureté dans des silicates de calcium et de magnésium, et le carbonate de calcium ; où :
- ledit talc micronisé de haute pureté dans des silicates de calcium et de magnésium est présent à raison de 0,5 à 12 % en poids ;
- ledit carbonate de calcium a la forme d'une nanocharge et est présent à raison de 0,1 à 7,5 % en poids ;
- lesdites charges ayant une structure anisotrope sont choisies dans le groupe constitué par les nanotubes de carbone et les fibres de verre et sont présentes à raison de 0,5 à 7,5 % en poids.

8. Matériau selon une ou plusieurs des précédentes revendications 3 et 7, dans lequel :
- lesdits polymères de propylène isotactique sont des copolymères de propylène séquencés, ayant une teneur moyenne en éthylène, présents en un pourcentage égal à 71,7 % en poids du total,
- lesdits polymères modifiés sont des polymères de poly(α-oléfine) (POE), avec une phase cristalline, présents en un pourcentage égal à 20,5 % en poids du total,
- lesdits promoteurs de compatibilité sont des polymères d'oléfine fonctionnalisés avec de l'anhydride maléique, présents en un pourcentage égal à 2,5 % en poids du total,
- lesdits additifs sont choisis dans le groupe constitué par : les phénols, les phosphites, les thioéthers, et sont présents en un pourcentage égal à 0,3 % en poids du total,
- lesdites charges sont constituées de carbonate de calcium de taille nanométrique, présent en un pourcentage égal à 5 % en poids du total.

9. Matériau selon une ou plusieurs des revendications 3 et 7, dans lequel :
- lesdits polymères de propylène isotactique sont des copolymères de propylène séquencés, ayant une teneur moyenne en éthylène, présents en un pourcentage égal à 71,7 % en poids du total,
- lesdits polymères modifiés sont des polymères de poly(α-oléfine) (POE), avec une phase cristalline, présents en un pourcentage égal à 20,5 % en poids du total,
- lesdits promoteurs de compatibilité sont des polymères d'oléfine fonctionnalisés avec de l'anhydride maléique, présents en un pourcentage égal à 2,5 % en poids du total,
- lesdits additifs sont choisis dans le groupe constitué par : les phénols, les phosphites, les thioéthers, et sont présents en un pourcentage égal à 0,3 % en poids du total,
- lesdites charges sont constituées de nanotubes de carbone qui sont présents en un pourcentage égal à 5 % en poids du total.

10. Utilisation du matériau composite rigide haute résilience d'une ou plusieurs des précédentes revendications 3, 7, 8 et 9, pour des feuilles destinées à un thermoformage par extrusion, un moulage par injection de boîtiers techniques, un moulage de récipients pour instruments électriques/électroniques, un moulage par injection d'instruments mécaniques, un moulage par injection de récipients pour la protection de systèmes électroniques et pour des appareils électriques, un moulage par injection de composants pour le secteur automobile.
